# EUROPÄISCHE PATENTSCHRIFT

(11) **EP 2 329 918 B1**
(45) Veröffentlichungstag und Bekanntmachung des Hinweises auf die Patenterteilung: **14.11.2012**
(21) Anmeldenummer: 09178217.7
(22) Anmeldetag: 07.12.2009
(51) Int. Cl.: B25B 5/14, B23K 37/04

(54) **Vorrichtung zum gegenseitigen Positionieren von zwei miteinander zu verbindenden Werkstücken**
Device for mutual positioning of two workpieces to be connected to each other
Dispositif de positionnement réciproque de deux pièces à usiner à relier l'une à l'autre

(43) Veröffentlichungstag der Anmeldung: 08.06.2011
(73) Patentinhaber: Creametal, 3011 Bern (CH)
(72) Erfinder: Stiefenhofer, Rolf, 3612 Steffisburg (CH); Egger, Michael, 9304 Bernhardzell (CH)
(74) Vertreter: AMMANN PATENTANWÄLTE AG BERN

(56) Entgegenhaltungen:
- JP-A- 8 132 286
- US-A- 4 881 726
- US-B1- 6 648 318

## Beschreibung

Die Erfindung betrifft eine Vorrichtung zum gegenseitigen Positionieren von zwei miteinander zu verbindenden Werkstücken, mit einer ersten Auflage für ein erstes Werkstück und einer zweiten Auflage für ein zweites Werkstück, wobei die zweite Auflage relativ zur ersten Auflage verstellbar ist, wobei auf der ersten Auflage mindestens eine Führungsbacke angeordnet ist, die eine rechtwinklig zur Auflage orientierte Führungsebene für das erste Werkstück bildet, wobei auf der zweiten Auflage mindestens eine Positionierleiste und ein Anschlag zur Anlage des zweiten Werkstücks angeordnet ist und die zweite Auflage um eine rechtwinklig zur Führungsebene angeordnete Schwenkachse schwenkbar und in einer Richtung rechtwinklig zur Schwenkachse verstellbar ist.

Aus dem Dokument DE19541544A1 ist ein Spannwerkzeug mit zwei miteinander verbundenen Klemmvorrichtungen bekannt, die dazu dient, zwei Werkstücke gegeneinander zu spannen, um sie miteinander zu verbinden. Falls mit der Vorrichtung mehrere gleiche Teilepaare nacheinander gespannt und verbunden werden sollen, müssen die Teile jedes Mal vor dem eigentlichen Spannen gegeneinander ausgerichtet werden, was relativ viel Zeit in Anspruch nimmt und kein gleichmässiges Resultat garantiert.

Das Dokument JP08132286A zeigt eine auf den Endbereich eines länglichen Trägers aufsetzbare Vorrichtung zum Positionieren einer Endplatte an der Stirnseite dieses Trägers. Am Hauptteil der Vorrichtung ist eine der Länge und Breite der Endplatte anpassbare Haltevorrichtung um eine Achse schwenkbar angeordnet.

Ausgehend von diesem Stand der Technik liegt der Erfindung die Aufgabe zugrunde, eine Vorrichtung zum gegenseitigen Positionieren von zwei miteinander zu verbindenden Werkstücken vorzuschlagen, welche Vorrichtung modular aufgebaut ist.

Diese Aufgabe wird erfindungsgemäss dadurch gelöst, dass die zweite Auflage mit einer Schiebeplatte verbunden ist, die ihrerseits auf einer um die Schwenkachse schwenkbaren Schwenkplatte in einer Richtung rechtwinklig zur Schwenkachse verstellbar angeordnet und vorzugsweise durch Arretiermittel feststellbar ist.

Diese erfindungsgemässe Lösung hat insbesondere den Vorteil, dass nach einer einmaligen Einstellung die beiden Werkstücke auf die dafür vorgesehenen Auflagen aufgelegt, miteinander in Kontakt gebracht und miteinander verbunden werden können, ohne dass dabei an der Vorrichtung selbst noch Manipulationen vorgenommen werden müssen. Dies ist ganz besonders vorteilhaft, wenn mehrere gleiche Werkstückpaare in Serie miteinander zu verbinden sind. Die Schiebeplatte ermöglicht dabei, die zweite Auflage als Ganzes bezüglich der ersten Auflage zu verstellen.

Nach einer Ausführungsart der Erfindung sind Arretiermittel zum Feststellen der Schwenklage der zweiten Auflage bezüglich der ersten Auflage vorhanden. Dies erlaubt eine genaue und wiederholbare Einstellung des Winkels zwischen den beiden zu verbindenden Werkstücken.

Eine andere Ausführungsart sieht vor, dass die Führungsbacke in einer Richtung rechtwinklig zur Führungsebene verstellbar und vorzugsweise durch Arretiermittel bezüglich der ersten Auflage feststellbar ist. Dadurch lassen sich Werkstücke unterschiedlicher Grösse exakt auf der ersten Auflage positionieren.

Nach einer weiteren Ausführungsart sind zwei Führungsbacken vorhanden, um das erste Werkstück zwischen sich aufzunehmen. Dadurch wird das erste Werkstück exakt zwischen den Führungsbacken geführt und kann in Richtung seiner Längsachse verschoben und in Bezug auf das zweite Werkstück positioniert werden.

Gemäss einer weiteren Ausführungsart ist vorgesehen, dass die Positionierleiste in einer Richtung rechtwinklig zur Führungsebene verstellbar und vorzugsweise durch Arretiermittel bezüglich der zweiten Auflage feststellbar ist. Dadurch lassen sich Werkstücke unterschiedlicher Grösse exakt auf der zweiten Auflage positionieren.

Eine andere Ausführungsart sieht vor, dass zwei Positionierleisten vorhanden sind, um das zweite Werkstück zwischen sich aufzunehmen. Durch diese zwei Positionierleisten und den Anschlag wird das zweite Werkstück in einer definierten Position auf der zweiten Auflage gehalten.

Nach einer weiteren Ausführungsart ist der Anschlag ortsfest an der zweiten Auflage angeordnet und begrenzt eine Verschiebung des zweiten Werkstücks auf der zweiten Auflage in Richtung zur Schwenkachse hin. Diese Ausführung ist in allen Fällen besonders vorteilhaft, in denen die erste Auflage horizontal angeordnet und die zweite Auflage zur ersten Auflage geneigt ist. Das zweite Werkstück wird dann automatisch durch Schwerkraft in eine definierte Position am Anschlag gebracht.

Schliesslich ist nach einer weiteren Ausführungsart vorgesehen, dass die zweite Auflage von der Schiebeplatte abnehmbar und in einer um eine parallel zur Schwenkachse angeordnete Achse geschwenkten Position mit der Schiebeplatte verbindbar ist. Dies erlaubt nicht nur ein einfaches Zerlegen der Vorrichtung für den Transport, sondern erweitert auch den Einsatzbereich, indem der Bereich der relativen Schwenkpositionen zwischen der ersten und zweiten Auflage erweitert wird.

Ein Ausführungsbeispiel der Erfindung wird nachstehend unter Bezugnahme auf die angefügten Zeichnungen näher beschrieben. Es zeigt
- Figur 1: eine perspektivische Ansicht eines Ausführungsbeispiels der erfindungsgemässen Vorrichtung,
- Figur 2: einen Aufriss der Vorrichtung gemäss Figur 1,
- Figur 3: einen Grundriss der Vorrichtung gemäss Figur 1,
- Figur 4: einen Seitenriss der Vorrichtung gemäss Figur 1 und
- Figur 5: einen Aufriss der selben Vorrichtung in einem alternativen Betriebszustand.

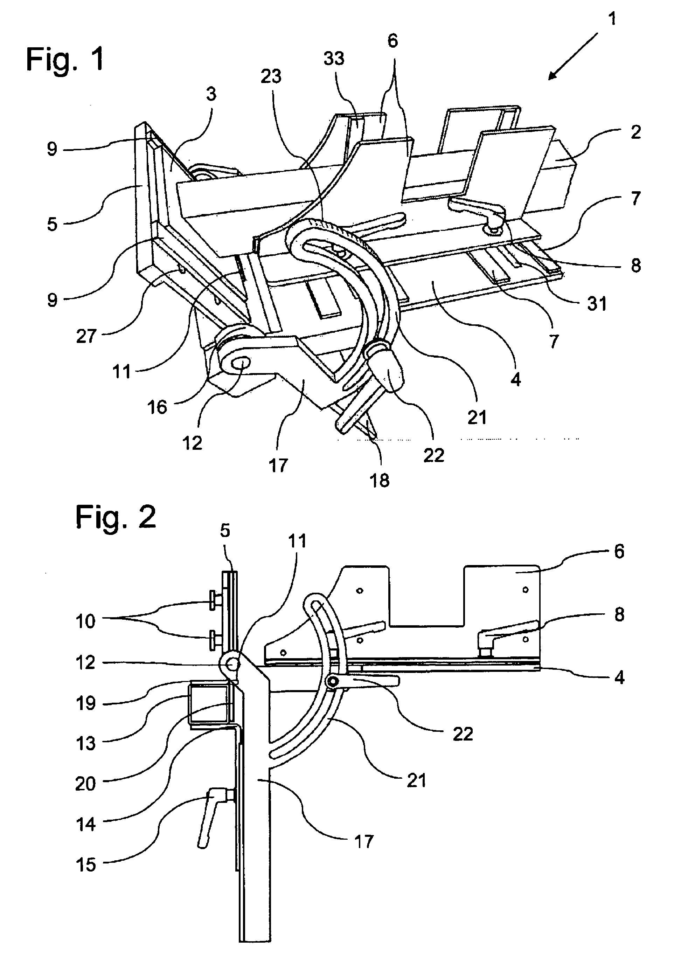

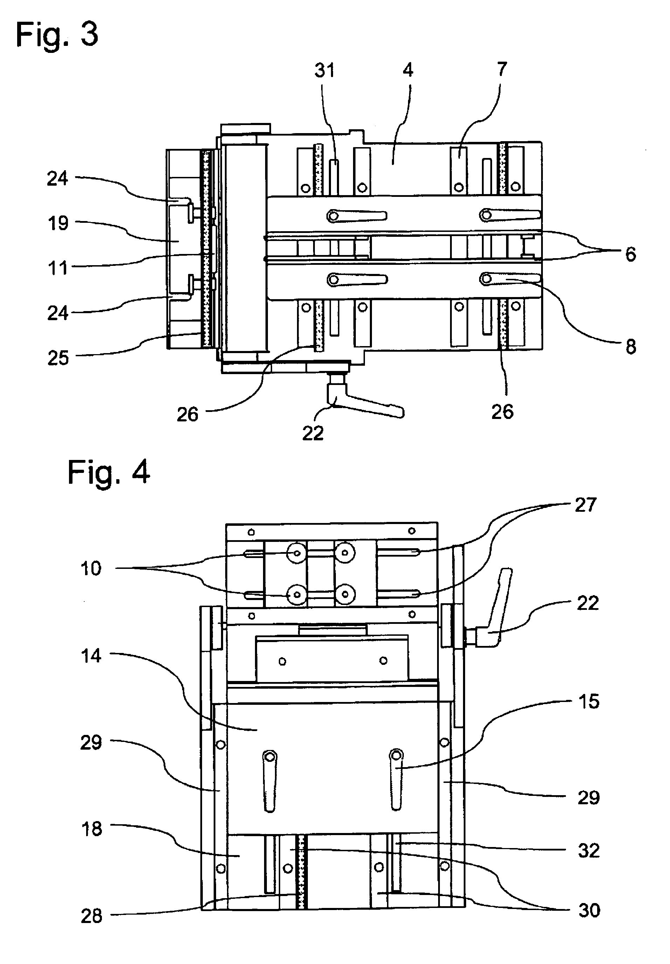

Figur 1 zeigt in einer perspektivischen Ansicht eine als Ganzes mit 1 bezeichnete Vorrichtung zum gegenseitigen Positionieren von zwei miteinander zu verbindenden Werkstücken 2 und 3, die in der dargestellten gegenseitigen Lage beispielsweise miteinander verschweisst werden sollen. Die Figuren 2 bis 4 zeigen verschiedene Ansichten der selben Vorrichtung. Beim ersten Werkstück handelt es sich in diesem Beispiel um einen Pfosten 2, beispielsweise für ein Treppengeländer. Das zweite Werkstück ist eine am Ende des Pfostens 2 anzuschweissende Platte 3, die beispielsweise als Fussplatte dient. In gleicher Weise kann auch ein Träger für einen Handlauf mit dem Pfosten 2 verbunden werden. Der Winkel zwischen dem Pfosten 2 und der Platte 3 ist entsprechend der Neigung der Treppe eingestellt. Der Pfosten 2 liegt auf einer feststehenden Auflage 4 und ist dabei durch beidseitig von ihm angeordnete Führungsbacken 6 so geführt, dass er in seiner Längsrichtung auf der Auflage 4 verschoben werden kann. Zur definierten Anlage und leichten Verschiebbarkeit des Werkstückes 2 können an den Führungsbacken 6 Führungsstücke 33 angeordnet sein. Die Führungsbacken 6 sind auf Gleitschienen 7 quer zur Längsrichtung des Pfostens 2 verschiebbar und mittels Feststellhebeln 8 in jeder Position arretierbar. Die Feststellhebel 8 wirken mit Gewindebolzen zusammen, die durch in der Auflage 4 angeordnete Schlitze 31 ragen. In der Auflage 4 sind Massstäbe 26 (Figur 3) eingelassen, um die Einstellung der Position der Führungsbacken 6 zu erleichtern.

Die Platte 3 liegt auf einer Auflage 5, wobei sie an einem Anschlag 11 anliegt und beidseitig durch Positionierleisten 9 geführt ist. Die Positionierleisten 9 sind in einer Richtung rechtwinklig zur Längsachse des Pfostens 2 verstellbar und durch Feststellknöpfe 10 (Figuren 2 und 4) arretierbar, welche mit in Langlöchern 27 (Figur 4) geführten Gewindebolzen zusammenwirken. Ein Massstab 25 (Figur 3) hilft bei der exakten Einstellung der Positionierleisten 9. Die Auflage 5 ist auf einem Stützrohr 13 (Figur 2) gelagert, indem zwei Schenkel 19, 20 der Auflage 5 an diesem Stützrohr 13 anliegen. In Figur 3 ist der Schenkel 19 und in ihm vorhandene Schlitze 24 zur Befestigung der Auflage 5 am Stützrohr 13 sichtbar. Das Stützrohr 13 ist von einer abgewinkelten Schiebeplatte 14 (Figuren 2 und 4) getragen, die ihrerseits auf einer Schwenkplatte 18 (Figur 4) verschiebbar gelagert und mit Arretierhebeln 15 in der gewählten Position fixierbar ist. Die Arretierhebel 15 wirken mit Gewindebolzen zusammen, die durch in der Schwenkplatte 18 angeordnete Schlitze 32 ragen. Die Verstellbewegungen der Schiebeplatte 14 auf der Schwenkplatte 18 werden durch zwischen den Platten 14 und 18 angeordnete Gleitschienen 30 und seitlich der Schiebeplatte 14 angeordnete Führungsschiene 29 erleichtert. Ein auf der Schwenkplatte 18 angeordneter Massstab 28 unterstützt das genaue Positionieren der Schiebeplatte 14 und damit der Auflage 5. Die Schwenkplatte 18 ist mit einem Schwenkhebel 17 verbunden, der von einer Schwenkachse 12 getragen wird, die ihrerseits in einem Lagerblock 16 aufgenommen ist, der mit der ersten Auflage 4 fest verbunden ist. Am den Schwenkhebel 17 ist eine Schwenkführung 21 angeordnet, die mit einem Hebel 22 in einer beliebigen Schwenkposition fixierbar ist. Eine auf der Schwenkführung 21 angeordnete Skala 23 hilft dabei, eine bestimmte Schwenklage wiederholbar einzustellen.

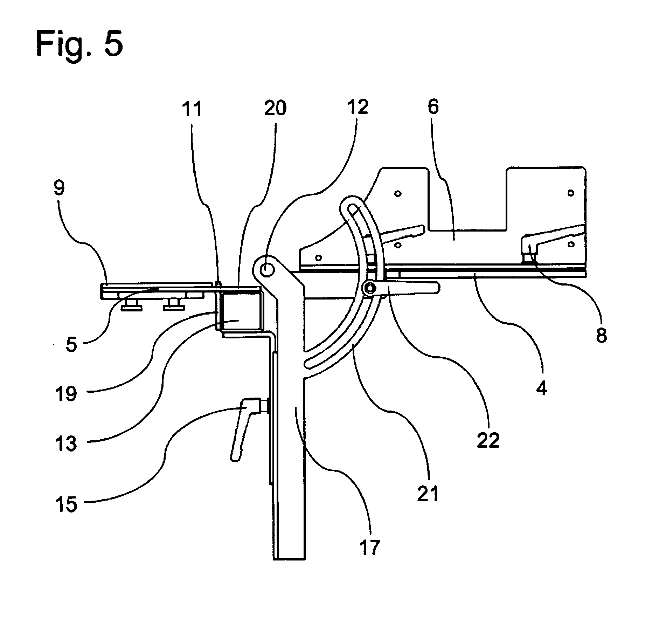

Figur 5 zeigt in einer der Figur 2 entsprechenden Ansicht die Vorrichtung 1 in einem alternativen Betriebszustand, der dazu gedacht ist, ein Werkstück, beispielsweise eine Platte 3 nicht wie vorangehend beschrieben an der Stirnseite eines länglichen Werkstücks, beispielsweise eines Pfostens 2 zu positionieren und zu befestigen, sondern an dessen Mantelfläche. Dazu ist in der Darstellung nach Figur 5 die Auflage 5 am Stützrohr 13 in einer gegenüber der in den Figuren 1 bis 4 um einen rechten Winkel nach links versetzten Lage befestigt. Das erste, längliche Werkstück kann nun durch die Führungsbacken 6 geführt auf der Auflage 4 positioniert und das zweite Werkstück auf die Auflage 5 gelegt werden. Dann wird die Schiebeplatte 14 so weit verschoben, bis sich die Werkstücke berühren.

### Bezugszeichenliste

- 1: Vorrichtung
- 2: Pfosten
- 3: Platte
- 4: Auflage fest
- 5: Auflage verstellbar
- 6: Führungsbacken
- 7: Gleitschienen
- 8: Feststellhebel
- 9: Positionierleisten
- 10: Feststellknöpfe
- 11: Anschlag
- 12: Schwenkachse
- 13: Stützrohr
- 14: Schiebeplatte
- 15: Arretierhebel
- 16: Lagerblock
- 17: Schwenkhebel
- 18: Schwenkplatte
- 19: Schenkel
- 20: Schenkel
- 21: Schwenkführung
- 22: Hebel
- 23: Skala
- 24: Langloch
- 25: Massstab
- 26: Massstäbe
- 27: Langloch
- 28: Massstab
- 29: Führungsschiene
- 30: Gleitschienen

- 31: Schlitz
- 32: Schlitz
- 33: Führungsstück
- 34 35 36 37 38 39 40:

## Patentansprüche

1. Vorrichtung (1) zum gegenseitigen Positionieren von zwei miteinander zu verbindenden Werkstücken (2, 3), mit einer ersten Auflage (4) für ein erstes Werkstück (2) und einer zweiten Auflage (5) für ein zweites Werkstück (3), wobei die zweite Auflage (5) relativ zur ersten Auflage (4) verstellbar ist, wobei auf der ersten Auflage (4) mindestens eine Führungsbacke (6) angeordnet ist, die eine rechtwinklig zur Auflage (4) orientierte Führungsebene für das erste Werkstück (2) bildet, wobei auf der zweiten Auflage (5) mindestens eine Positionierleiste (9) und ein Anschlag (11) zur Anlage des zweiten Werkstücks (3) angeordnet ist und die zweite Auflage (5) um eine rechtwinklig zur Führungsebene angeordnete Schwenkachse (12) schwenkbar und in einer Richtung rechtwinklig zur Schwenkachse (12) verstellbar ist, **dadurch gekennzeichnet, dass** die zweite Auflage (5) mit einer Schiebeplatte (14) verbunden ist, die ihrerseits auf einer um die Schwenkachse (12) schwenkbaren Schwenkplatte (18) in einer Richtung rechtwinklig zur Schwenkachse verstellbar angeordnet und vorzugsweise durch Arretiermittel (15) feststellbar ist.

2. Vorrichtung nach Anspruch 1, **dadurch gekennzeichnet, dass** Arretiermittel (21, 22) zum Feststellen der Schwenklage der zweiten Auflage (5) bezüglich der ersten Auflage (4) vorhanden sind.

3. Vorrichtung nach einem der vorangehenden Ansprüche, **dadurch gekennzeichnet, dass** die Führungsbacke (6) in einer Richtung rechtwinklig zur Führungsebene verstellbar und vorzugsweise durch Arretiermittel (8) bezüglich der ersten Auflage (4) feststellbar ist.

4. Vorrichtung nach einem der vorangehenden Ansprüche, **dadurch gekennzeichnet, dass** zwei Führungsbacken (6) vorhanden sind, um das erste Werkstück (2) zwischen sich aufzunehmen.

5. Vorrichtung nach einem der vorangehenden Ansprüche, **dadurch gekennzeichnet, dass** die Positionierleiste (9) in einer Richtung rechtwinklig zur Führungsebene verstellbar und vorzugsweise durch Arretiermittel (19) bezüglich der zweiten Auflage (5) feststellbar ist.

6. Vorrichtung nach einem der vorangehenden Ansprüche, **dadurch gekennzeichnet, dass** zwei Positionierleisten (9) vorhanden sind, um das zweite Werkstück (3) zwischen sich aufzunehmen.

7. Vorrichtung nach einem der vorangehenden Ansprüche, **dadurch gekennzeichnet, dass** der Anschlag (11) ortsfest an der zweiten Auflage (5) angeordnet ist und eine Verschiebung des zweiten Werkstücks (3) auf der zweiten Auflage (5) in Richtung zur Schwenkachse (12) hin begrenzt.

8. Vorrichtung nach einem der vorangehenden Ansprüche, **dadurch gekennzeichnet, dass** die zweite Auflage (5) von der Schiebeplatte (14) abnehmbar und in einer um eine parallel zur Schwenkachse (12) angeordnete Achse geschwenkten Position mit der Schiebeplatte (14) verbindbar ist.

## Claims

1. Device (1) for mutually positioning two workpieces (2, 3) to be connected to each other, comprising a first support (4) for a first workpiece (2) and a second support (5) for a second workpiece (3), wherein the second support (5) is adjustable relative to the first support (4), wherein at least one guide bracket (6) is arranged on the first support (4) and forms a guiding plane for the first workpiece (2) that is oriented perpendicularly to the support (4), wherein at least one positioning bar (9) and a stop (11) for locating the second workpiece (3) is arranged on the second support (5) and the second support (5) is pivotable about a pivot axis (12) arranged perpendicularly to the guiding plane and is adjustable in a direction perpendicular to the pivot axis (12), **characterised in that** the second support (5) is connected to a sliding plate (14) that is itself arranged adjustably in a direction perpendicular to the pivot axis (12) on a pivoting plate (18) that is pivotable about the pivot axis, and preferably lockable by locking means (15).

2. Device according to claim 1, **characterised in that** locking means (21, 22) for locking the pivoting position of the second support (5) relative to the first support (4) are provided.

3. Device according to one of the preceding claims, **characterised in that** the guide bracket (6) is adjustable in a direction perpendicular to the guiding plane and preferably lockable relative to the first support (4) by locking means (8).

4. Device according to any one of the preceding claims, **characterised in that** two guide brackets (6) are provided in order to receive the first workpiece (2) between them.

5. Device according to any one of the preceding claims, **characterised in that** the positioning bar (9) is adjustable in a direction perpendicular to the guiding plane and preferably lockable relative to the second support (5) by locking means (19).

6. Device according to any one of the preceding claims, **characterised in that** two positioning bars (9) are provided in order to receive the second workpiece (3) between them.

7. Device according to any one of the preceding claims, **characterised in that** the stop (11) is fixedly arranged on the second support (5) and limits a displacement of the second workpiece (3) on the second support (5) in the direction of the pivot axis (12).

8. Device according to any one of the preceding claims, **characterised in that** the second support (5) is removable from the sliding plate (14) and connectable to the sliding plate (14) in a position pivoted about an axis that is arranged in parallel to the pivot axis (12).

## Revendications

1. Dispositif (1) pour le positionnement réciproque de deux pièces (2, 3) destinées à être jointes, comprenant un premier support (4) pour une première pièce (2) et un deuxième support (5) pour une deuxième pièce (3), où le deuxième support (5) est ajustable par rapport au premier support (4), où sur le premier support (4) est agencée au moins une joue de guidage (6) formant un plan de guidage pour la première pièce (2) qui est orienté perpendiculairement audit support (4), où sur le deuxième support (5) est agencé au moins une barre de positionnement (9) et une butée (11) pour la mise en butée de la deuxième pièce (3), et le deuxième support (5) peut pivoter autour d'un axe de pivotement (12) agencé perpendiculairement audit plan de guidage et est ajustable dans une direction perpendiculaire à l'axe de pivotement (12), **caractérisé en ce que** le deuxième support (5) est relié à une plaque coulissante (14) laquelle est agencée elle-même de manière ajustable dans une direction perpendiculaire à l'axe de pivotement (12) sur une plaque pivotante (18) pouvant pivoter autour de l'axe de pivotement, et est préférablement verrouillable par des moyens d'arrêt (15).

2. Dispositif selon la revendication 1, **caractérisé en ce que** des moyens d'arrêt (21, 22) pour bloquer la position de pivotement du deuxième support (5) par rapport au premier support (4) sont pourvus.

3. Dispositif selon l'une des revendications précédentes, **caractérisé en ce que** la joue de guidage (6) est ajustable dans une direction perpendiculaire au plan de guidage et préférablement blocable par rapport au premier support (4) par des moyens d'arrêt (8).

4. Dispositif selon l'une quelconque des revendications précédentes, **caractérisé en ce que** deux joues de guidage (6) sont pourvues afin de recevoir la première pièce (2) entre elles.

5. Dispositif selon l'une quelconque des revendications précédentes, **caractérisé en ce que** la barre de positionnement (9) est ajustable dans une direction perpendiculaire au plan de guidage et préférablement blocable par rapport au deuxième support (5) par des moyens d'arrêt (19).

6. Dispositif selon l'une quelconque des revendications précédentes, **caractérisé en ce que** deux barres de positionnement (9) sont pourvues afin de recevoir la deuxième pièce (3) entre elles.

7. Dispositif selon l'une quelconque des revendications précédentes, **caractérisé en ce que** la butée (11) est agencée sur le deuxième support (5) de manière fixe et limite le déplacement de la deuxième pièce (3) sur le deuxième support (5) en direction de l'axe de pivotement (12).

8. Dispositif selon l'une quelconque des revendications précédentes, **caractérisé en ce que** le deuxième support (5) est amovible de la plaque coulissante (14) et peut être relié à la plaque coulissante (14) dans une position pivotée autour d'un axe parallèle à l'axe de pivotement (12).
